(19) Europäisches Patentamt / European Patent Office / Office européen des brevets

(11) **EP 2 379 619 B2**

(12) **NOUVEAU FASCICULE DE BREVET EUROPEEN**
Après la procédure d'opposition


(45) Date de publication et mention de la décision concernant l'opposition:
**04.01.2017 Bulletin 2017/01**

(45) Mention de la délivrance du brevet:
**28.08.2013 Bulletin 2013/35**

(21) Numéro de dépôt: **10701128.0**

(22) Date de dépôt: **15.01.2010**

(51) Int Cl.:
***C08G 63/08*** *(2006.01)*

(86) Numéro de dépôt international:
**PCT/EP2010/050477**

(87) Numéro de publication internationale:
**WO 2010/081887 (22.07.2010 Gazette 2010/29)**


(54) **ACIDE POLYLACTIQUE ISOTACTIQUE ET SON PROCEDE DE FABRICATION**

ISOTAKTISCHE POLYMILCHSÄURE UND VERFAHREN ZU IHRER HERSTELLUNG

ISOTACTIC POLYLACTIC ACID AND METHOD FOR PRODUCING SAME


(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.01.2009 BE 200900028**

(43) Date de publication de la demande:
**26.10.2011 Bulletin 2011/43**



(73) Titulaire: **Futerro S.A.**
**7760 Escanaffles (BE)**

(72) Inventeurs:
- **COUPIN, Thierry**
  **B-7141 Carnieres (BE)**
- **COSZACH, Philippe**
  **B-7760 Escanaffles (BE)**
- **HOTTOIS, Delphine**
  **B-7760 Escanaffles (BE)**

(74) Mandataire: **Heck, Dieter et al**
**Pronovem - Office Van Malderen**
**Parc d'affaires Zénobe Gramme- bâtiment K**
**Square des Conduites d'eau 1-2**
**4020 Liège (BE)**



(56) Documents cités:
**WO-A2-01/81610 BE-A3- 1 008 099**

- **DATABASE WPI Week 200518 Thomson Scientific, London, GB; AN 2005-168289 XP002542699 & JP 2005 042084 A (TOYOTA CHUO KENKYUSHO KK) 17 février 2005 (2005-02-17)**


EP 2 379 619 B2

## Description

### DOMAINE TECHNIQUE DE L'INVENTION

L'invention se rapporte à un procédé de polymérisation pour l'obtention d'un polymère isotactique du lactide. L'invention concerne également ledit polymère et son utilisation dans les applications connues, notamment dans le domaine de l'emballage, du textile et des applications durables.

### ARRIERE PLAN TECHNOLOGIQUE DE L'INVENTION

Les polymères synthétiques basés sur des composés issus de la pétrochimie ont eu un impact industriel très important au milieu du 20$^{e}$ siècle. Malgré les nombreux avantages de ces matériaux, deux inconvénients restent pour l'instant à solutionner : l'utilisation de ressources non-renouvelables pour leur production et la valorisation de leur fin de vie. Compte tenu de leurs propriétés intrinsèques, les polymères biodégradables sont donc devenus une alternative importante et de nombreuses avancées ont été accomplies tant du point de vue de la synthèse que de la transformation de ces matériaux. Ceux-ci sont d'ailleurs utilisés pour un grand nombre d'applications comme l'emballage et le textile. Parmi la variété de polymères biodégradables, l'acide polylactique (PLA) est un des plus couramment utilisé et étudié.

L'acide polylactique, bien qu'étant un homo-polymère, peut se différencier dans sa structure au niveau de sa stéréorégularité. L'acide poly-L-lactique, issu de la polymérisation du L-lactide, et l'acide poly-D-lactique, issu de la polymérisation du D-lactide, sont des énantiomères de stéréorégularité isotactique, tandis que la polymérisation du méso-lactide fournit un acide polylactique syndiotactique.

US 6,166,169 concerne un polyester aliphatique obtenu par polymérisation d'au moins un monomère choisi parmi le groupe comportant les lactides, lactones, carbonates cycliques et les anhydrides cycliques.

BE 1 008 099 A3 décrit un procédé de polymérisation en masse pour l'obtention des acides polylactiques.

Un des problèmes rencontrés dans l'art antérieur avec les polymères d'acide polylactique est leur faible résistance thermique. Les produits manufacturés par la suite avec ces résines ont tendance à se déformer facilement lorsqu'ils sont exposés à une température supérieure à leur température de transition vitreuse. Cette faible résistance thermique est d'autant plus importante que les polymères d'acide polylactique produits par synthèse sont très peu cristallins. De ce fait, les résines ou polymères d'acide polylactique ne conviennent pas toujours à des applications à haute température, comme par exemple les gobelets pour boissons chaudes, l'emballage de substances chaudes ou encore les emballages destinés à une utilisation dans un four micro-ondes. A l'heure actuelle, ces polymères d'acide polylactique présentent donc plusieurs inconvénients, notamment un taux de défaut d'insertion et de défaut de racémisation important inséré dans la chaîne polymérique. Il existe donc un besoin pour produire un polymère d'acide polylactique ayant un plus faible taux de défaut d'insertion et de défaut de racémisation. Or à l'heure actuelle, il semblerait que le procédé de polymérisation en solution ne permette pas réellement l'obtention d'un tel polymère d'acide polylactique à un coût économique raisonnable. En effet, le procédé de polymérisation en solution a pour désavantage un temps de réaction généralement long et la nécessité de séparer, à l'issue du procédé de polymérisation, le polymère obtenu du solvant. Il existe donc un besoin pour mettre au point un procédé de polymérisation industriel qui ne rencontre pas les inconvénients mentionnés ci-dessus tout en permettant l'obtention de polymères d'acide polylactique à très faible taux de défauts insérés dans la chaîne polymérique.

L'objet de la présente invention est de fournir un procédé de polymérisation en masse pour l'obtention d'acide polylactique isotactique possédant un faible taux de défaut de tacticité.

Un autre objet de la présente invention est de fournir un procédé de polymérisation en masse pour l'obtention d'acide polylactique isotactique présentant une cristallinité améliorée.

Un autre objet de la présente invention est de fournir un procédé de polymérisation en masse pour l'obtention d'acide polylactique isotactique présentant une tenue thermique améliorée ainsi que celle des objets pouvant être produits à partir de celui-ci.

Encore un autre objet de la présente invention est de fournir un procédé de polymérisation en masse pour l'obtention d'acide polylactique isotactique présentant une rigidité améliorée.

Au moins un des objets mentionnés ci-dessus est réalisé avec la présente invention.

La présente invention a donc pour objet de remédier à au moins un des inconvénients cités précédemment.

### DESCRIPTION DETAILLEE DE L'INVENTION

La demanderesse a maintenant trouvé que si l'on effectue la polymérisation du lactide selon les conditions de polymérisation en masse de la présente invention, un polymère d'acide polylactique à très faible taux de défauts de tacticité est obtenu. D'autre part, le procédé de polymérisation en masse de l'invention est particulièrement bien applicable à une exploitation industrielle. En effet, il permet une obtention rapide du polymère et permet, moyennant séchage

éventuel, une exploitation directe du polymère contrairement au procédé en solution à la suite duquel le polymère obtenu doit être séparé du solvant, ce qui d'une part augmente la complexité du procédé et d'autre part affecte sa rentabilité économique.

La demanderesse a également trouvé que du fait de sa cristallinité, il est possible de sécher l'acide polylactique selon l'invention à des températures plus élevées et donc avec une productivité accrue. L'efficacité du séchage permet d'éviter la dégradation par hydrolyse du produit lors de sa transformation et de maintenir ainsi les propriétés mécaniques du produit. Cette augmentation de cristallinité facilite également les étapes de conditionnement et de stockage du produit.

La présente invention concerne un procédé de polymérisation en masse pour l'obtention d'un acide polylatique de configuration L ou D selon les revendications.

Selon la présente invention, le pourcentage d'unité dimère LL dans un polymère D ou d'unité dimère DD dans un polymère L est définit comme étant « un pourcentage de défaut d'insertion ».

Selon la présente invention, le pourcentage d'unité dimère LD et/ou DL dans un polymère L ou D respectivement est définit comme étant « un pourcentage de défaut de racémisation » ou « pourcentage d'équivalent mésolactide ».

La présente invention concerne donc un procédé de polymérisation en masse permettant l'obtention d'un acide polylactique isotactique de configuration L ou D qui comprend un taux de défaut d'insertion compris entre 0 et 0,5% en poids d'acide polylactique et un taux de défaut de racémisation compris entre 0 et 2,5% en poids d'acide polylactique.

La présente invention concerne donc un procédé de polymérisation en masse permettant l'obtention d'acide polylactique isotactique possédant un faible taux de défaut de tacticité. Par défaut de tacticité, on entend la somme du pourcentage de défaut d'insertion et de défaut de racémisation.

Selon la présente invention, on entend par procédé en masse, toute polymérisation se faisant en absence de solvant.

La présente invention concerne également l'obtention de l'acide polylactique de configuration L ou D selon le procédé de l'invention.

Le terme « acide polylactique » est équivalent au terme « acide polylactide ».

Le terme « acide poly-L-lactique » ou « acide poly-L-lactide », tel qu'utilisé dans l'invention, se réfère à un polymère isotactique de formule générale (IV) dans laquelle n est un nombre entier compris entre 100 et 100.000 :

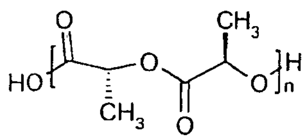

(IV)

Le terme « défaut d'insertion », tel qu'utilisé dans l'invention, se réfère à l'incorporation, dans un homo-polymère de stéréorégularité donné, d'une unité lactide de stéréorégularité inverse. Par exemple, le défaut d'insertion dans un acide poly-L-lactique se réfère à l'incorporation de D-D lactide dans la chaîne polymérique de l'acide poly-L-lactique, et donc à la présence d'une unité dimère DD de formule (Ia)

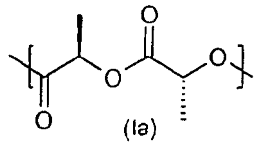

(Ia)

dans l'acide poly-L-lactide. Le terme « pourcentage de défaut d'insertion » se réfère donc à la proportion massique d'unité de stéréorégularité inverse le long de la chaîne polymérique d'un acide polylactique de stéréorégularité donné.

Le terme « défaut de racémisation », tel qu'utilisé dans l'invention, se réfère à l'incorporation de méso-lactide dans la chaîne polymérique de l'acide polylactique isotactique ou à l'inversion de la configuration d'un carbone asymétrique du lactide au cours de la polymérisation. Le terme « pourcentage de défaut de racémisation » se réfère donc à la proportion massique de motifs méso-lactide incorporé dans la chaîne polymère de l'acide polylactique. Le terme « motif méso-lactide » se réfère à un motif de formule générale (II) ou (III) :

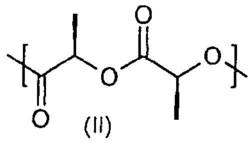
(II)

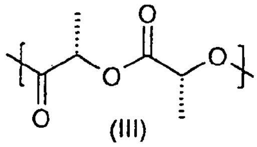
(III)

Dans le procédé de la présente invention, il est souhaitable d'utiliser du lactide de configuration stéréochimique D-D ou L-L ayant une pureté optique aussi appelée pureté isomérique en L ou D d'au moins 99,5% en poids, de préférence d'au moins 99,8% en poids.

De préférence, le L-L lactide utilisé dans le procédé comprend une teneur en D-D lactide inférieure à 0,2%, et le D-D lactide utilisé dans le procédé comprend une teneur en L-L lactide inférieure à 0,2%.

De préférence, la pureté chimique du lactide de départ est telle que l'acidité résiduelle est inférieure à 20 méq /kg et l'eau résiduelle est inférieure ou égale à 100 ppm, plus préférablement inférieure ou égale à 50 ppm.

Le terme « temps de réaction ou temps de séjour » tel qu'utilisé dans l'invention se réfère au lapse de temps pendant lequel l'acide poly-L-lactique ou l'acide poly-D-lactique est présent dans un réacteur ou une cascade de réacteurs, dans l'extrudeuse ou tout autre équipement de polymérisation pouvant fonctionner en mode batch ou continu, avec ou sans agitateur.

Selon un mode de réalisation préféré de l'invention, ledit procédé de préparation peut être effectué à une température comprise entre 170 et 200°C, préférentiellement à une température comprise entre 170 et 195°C, plus préférentiellement à une température comprise entre 175 et 185°C, encore plus préférentiellement à une température comprise entre 175 et 180°C. Toute configuration du réacteur pouvant favoriser le contrôle de la température comme par exemple un ratio surface d'échange/volume réactionnel ou tout autre système connu de l'homme de l'art sera préféré dans le cadre de l'invention.

Selon un autre mode de réalisation préféré de l'invention, ledit procédé de préparation peut être effectué pendant un temps de réaction compris entre 5 et 75 minutes, préférentiellement entre 10 et 60 minutes, plus préférentiellement entre 10 et 45 minutes, encore plus préférentiellement entre 15 et 30 minutes.

Selon un autre mode de réalisation préféré de l'invention, ledit procédé de préparation peut être effectué conjointement à une température comprise entre 170 et 195°C et pendant un temps de réaction compris entre 10 et 75 minutes, préférentiellement à une température comprise entre 170 et 185°C et un temps de réaction compris entre 15 et 30 minutes, préférentiellement à une température comprise entre 170 et 180°C et un temps de réaction compris entre 15 et 25 minutes.

Le contrôle conjoint de la pureté optique ou isomérique du monomère et des conditions opératoires du procédé de préparation permet d'obtenir un polymère d'acide polylactique présentant un degré de cristallinité plus important et une plus grande résistance thermique.

Selon un mode de réalisation préféré de l'invention, ledit procédé de préparation peut être effectué en présence d'un gaz inerte. le gaz inerte est l'azote. Le gaz inerte peut contenir, préférentiellement entre 0 et 50 ppm d'$H_2O$, plus préférentiellement entre 0 et 10 ppm d'$H_2O$. Préférentiellement, ledit gaz inerte peut avoir une teneur en $H_2O$ inférieure ou égale à 5 ppm.

Ledit procédé peut être effectué en continu dans un réacteur ou une cascade de réacteurs de polymérisation munis optionnellement d'un ou plusieurs agitateurs haute viscosité ou par extrusion dans une extrudeuse (ou réacteur horizontal) à simple, double ou multi vis. De préférence le procédé est en continu. De préférence le procédé est effectué en réacteur avec optionnellement un agitateur haute viscosité.

Ledit procédé de polymérisation peut être effectué, en surpression. En particulier, lorsque la polymérisation se fait dans un réacteur muni d'un agitateur haute viscosité, le procédé peut être effectué sous, surpression d'azote.

Selon un autre mode de réalisation particulier, on effectue la polymérisation par extrusion dans une extrudeuse.

Selon le procédé de l'invention, on conduit la polymérisation du lactide jusqu'à un taux de conversion compris entre 80% et la limite thermodynamique, de préférence elle est supérieure à 90%.

Le procédé de la présente invention est effectué en présence d'au moins un système catalytique. Ledit système catalytique comprend au moins un catalyseur et au moins un cocatalyseur.

De préférence le catalyseur est de formule (M) ($X^1$, $X^2$....$X^m$)$_n$ dans laquelle

- M est un métal sélectionné parmi le groupe comportant les éléments des colonnes 3 à 12 du tableau périodique ainsi que les éléments Al, Ga, In, Tl, Sn, Pb, Sb et Bi,

- $X^1$, $X^2$,....$X^m$ est un substituant sélectionné parmi le groupe comportant $C_1$-$C_{20}$ alkyle, $C_{6-30}$ aryle, oxyde, carboxylate, halogénure, $C_1$-$C_{20}$ alcoxy et des composés contenant des éléments du groupe 15 et/ou 16 du tableau périodique,

- m est un nombre entier compris entre 1 et 6, et

- n est un nombre entier compris entre 1 et 6.

Au sens de la présente invention, on entend par « alkyle » un groupe hydrocarboné linéaire, ou ramifié, saturé, de 1 à 20 atomes de carbone, en particulier de 1 à 16 atomes de carbone, en particulier de 1 à 12 atomes de carbone, en particulier de 1 à 10 atomes et plus particulièrement de 1 à 6 atomes de carbone. A titre d'exemple, sont inclus dans cette définition des radicaux tels que méthyle, éthyle, isopropyle, n-butyle, t-butyle, t-butylméthyle, n-propyle, pentyle, n- hexyle, 2-éthylbutyle, heptyle, octyle, nonyle, ou décyle.
Au sens de la présente invention, on entend par « aryle », un cycle aromatique comprenant de 1 à 3 noyaux aromatiques, éventuellement fusionnés, de 6 à 20 atomes de carbone, notamment de 6 à 10 atomes de carbone. A titre d'exemple de groupes aryle convenant à la mise en oeuvre de l'invention il est possible de mentionner le phényle, le phenétyle, le naphtyle ou le anthryle.
Au sens de la présente invention, on entend par « alcoxy » un groupe de formule générale R-O- où R est un groupe alkyle tel que définit ci-dessus. On peut citer, à titre d'exemple, les groupes méthoxy, éthoxy, propoxy, t-butoxy, n-butoxy, isobutoxy, sec-butoxy, n-pentoxy, isopentoxy, sec-pentoxy, t-pentoxy, hexyloxy, isopropoxy.
On entend par « halogénure » un chlorure, un fluorure, un iodure ou un bromure.
De préférence, le co-catalyseur est de formule générale $(Y)(R^1, R^2 ... R^q)_s$ dans laquelle

- Y est un élément sélectionné parmi les éléments du groupe 15 et/ou 16 du tableau périodique,

- $R^1$, $R^2$ ... $R^q$ est un substituant sélectionné parmi le groupe comportant $C_1$-$C_{20}$ alkyle, $C_6$-$C_{20}$ aryle, oxyde, halogènure, alcoxy, aminoalkyle, thioalkyle, phényl-oxy, aminoaryle, thioaryle, et des composés contenant les éléments du groupe 15 et/ou 16 du tableau périodique.

- q est un nombre entier compris enter 1 et 6, et

- s est un nombre entier compris entre 1 et 6.

On entend par « aminoalkyle » un groupe alkyle portant un groupement $-NR^a_2$ sur sa chaîne carbonée où $R^a$ est un alkyle, un aryle ou un hydrogène.
On entend par « thioalkyle » un groupe alkyle portant un groupement $R^bS$- où $R^b$ est un alkyle, un aryle ou un hydrogène.
On entend par « aminoaryle » un groupe aryle comportant un motif $-NR^c_2$ où $R^c$ est un aryle, un alkyle ou un hydrogène.
On entend par « thioaryle » un groupe aryle comportant un motif $R^dS$- où $R^d$ est un aryle, un alkyle ou un hydrogène.
Préférentiellement, le système catalytique comprend le bis(2-éthylhexanoate) d'étain comme catalyseur et la triphénylphosphine $PPh_3$ comme co-catalyseur. Ce système catalytique est connu et décrit par exemple dans le document US 6,166,169. Le rapport molaire entre le co-catalyseur et le catalyseur peut être compris entre 1/10 et 10/1, préférentiellement entre 1/3 et 3/1. Plus préférentiellement, le rapport molaire entre le co-catalyseur et le catalyseur peut être 1/1.
Le rapport molaire entre le lactide et le catalyseur peut être compris entre 200/1 et 10.000/1, préférentiellement entre 1.000/1 et 7.500/1, plus préférentiellement entre 1.500/1 et 6.000/1.
Le procédé de la présente invention comprend aussi l'utilisation d'un agent d'initiation. L'agent d'initiation peut être l'eau résiduelle contenue dans le lactide, un alcool ou une amine. L'alcool ou l'amine peut être un aliphatique ou aromatique de formule générale $R^{10}$-$(A)_s$ dans laquelle A est OH ou NH2 et s est 1 ou 2, $R^{10}$ est un alkyle comportant de 1 à 20 atomes de carbone ou un aryle comportant de 6 à 30 atomes de carbone. De préférence, $R^{10}$ est un alkyle comportant de 3 à 12 atomes de carbone ou un aryle comportant de 6 à 10 atomes de carbone.
Parmi les alcools, on peut citer l'isopropanol, le butanediol, l'octanol-1 et le dodécanol.
Parmi les amines, on peut citer l'isopropylamine et la 1,6 hexanediamine.
Selon un mode de réalisation préféré de l'invention, le rapport molaire entre le lactide et l'initiateur lorsque ce dernier est un alcool ou une amine peut être compris entre 50/1 et 1.000/1, préférentiellement entre 100/1 et 750/1, plus préférentiellement entre 200/1 et 600/1. Lorsque l'initiateur est l'eau résiduelle présente dans le lactide, le rapport molaire entre le lactide et l'eau peut être compris dans les mêmes gammes que celles mentionnées lorsque l'initiateur est un alcool ou une amine.
De préférence, l'initiateur est un alcool ou une amine.
La présente invention concerne également l'obtention de l'acide polylactique de configuration L ou D par le procédé de la présente invention.
L' acide polylactique de configuration L ou D susceptible d'être obtenu par le procédé de l'invention a un pourcentage de défaut d'insertion compris entre 0 et 0,5%, préférentiellement entre 0 et 0,3%, plus préférentiellement

entre 0 et 0,2% et un pourcentage de défaut de racémisation compris entre 0 et 2,5%, préférentiellement compris entre 0 et 1,5%, plus préférentiellement compris entre 0 et 1%. Plus préférentiellement, l'acide polylactique de configuration L ou D susceptible d'être obtenu par le procédé de l'invention a 0% de défaut d'insertion dans sa chaîne polymérique. Ainsi, le défaut de tacticité dudit acide polylactique peut uniquement provenir d'un défaut de racémisation. Les défauts d'insertion et de racémisation sont détectés par résonnance magnétique nucléaire au carbone 13 (RMN $^{13}C$).

Le faible pourcentage de défaut d'insertion et de racémisation au sein de la chaîne polymérique permet d'obtenir un acide polylactique dont la température de cristallisation, observable par calorimétrie différentielle à balayage selon la méthode ISO 11357-2, lors du refroidissement après la première chauffe est comprise entre 110 et 120°C et celle observable lors du refroidissement après la deuxième chauffe est comprise entre 90 et 100°C. Les polymères ainsi obtenus présentent un comportement cristallin amélioré et une résistance thermique améliorée.

L'acide polylactique de configuration L ou D susceptible d'être obtenu par le procédé de l'invention a une masse moléculaire moyenne en nombre (Mn) comprise entre 60.000 et 200.000, préférentiellement comprise entre 70.000 et 175.000, plus préférablement comprise entre 80.000 et 150.000 lorsqu'elle est mesurée par chromatographie par perméation de gel par rapport à un standard polystyrène dans le chloroforme à 35°C. Le rapport entre la masse moléculaire moyenne en poids (Mw) et la masse moléculaire moyenne en nombre (Mn) est généralement comprise entre 1,2 et 2,8.

Dans la présente invention, le terme « pourcentage de D-mer et « pourcentage de L-mer » se réfère respectivement au motif monomérique de type D et de type L que l'on retrouve dans le polylactide. Ce pourcentage est déterminé par méthode enzymatique.

L'acide poly-L-lactide susceptible d'être obtenu par le procédé de l'invention a de préférence un pourcentage en D-mer inférieur ou egal à 1,75% en poids d'acide poly-L-lactide, préférablement inférieur à 1,5%, plus préférablement inférieur à 1 %.

L'acide poly-D-lactide susceptible d'être obtenu par le procédé de l'invention a de préférence un pourcentage en L-mer inférieur ou egal à 1,75% en poids d'acide poly-D-lactide, préférablement inférieur à 1,5%, plus préférablement inférieur à 1 %.

La présente invention concerne également l'utilisation de l'acide polylactique isotactique tel qu'obtenu pour la fabrication d'emballage tel que les films d'emballage pour friandises, pour la fabrication d'objets à usage unique tel que par exemple des gobelets ou pour la fabrication de textile tel que par exemple des fibres. La présente invention concerne également l'utilisation de l'acide polylactique isotactique tel qu'obtenu dans le domaine des applications durables.

## EXEMPLES

<u>1.Protocole de détermination par RMN $^{13}C$ de la tacticité d'insertion et de la tacticité de racémisation et par dosage enzymatique de la tacticité globale en D-mer ou L-mer</u>

<u>a) Identification des pics d'insertion dans le poly-L-lactide (PL-LA)</u>

Des PL-LA modèles ont été polymérisés dans des conditions douces en ballon de façon à ne pas provoquer de racémisation du PL-LA et de façon à insérer des motifs D-LA entre des motifs de L-LA.

Ces synthèses de PL-LA modèles ont été effectuées dans les conditions suivantes :

- en solution dans le toluène : 100 g de lactide dans 400 ml de toluène,
- en présence du système catalytique bis(2-ethylhexanoate) d'étain et $PPh_3$,
- pendant 72 h à 90 °C.

Trois PL-LA modèles ont été préparés :

- un PL-LA avec 100 % de L-Lactide.
- un PL-LA avec un mélange de 95% de L-Lactide et 5 % de D-Lactide .
- un PL-LA avec un mélange de 90% de L-Lactide et 10 % de D-Lactide.

Le schéma 1 illustre l'insertion de D-Lactide dans une chaîne polymérique de PL-LA.

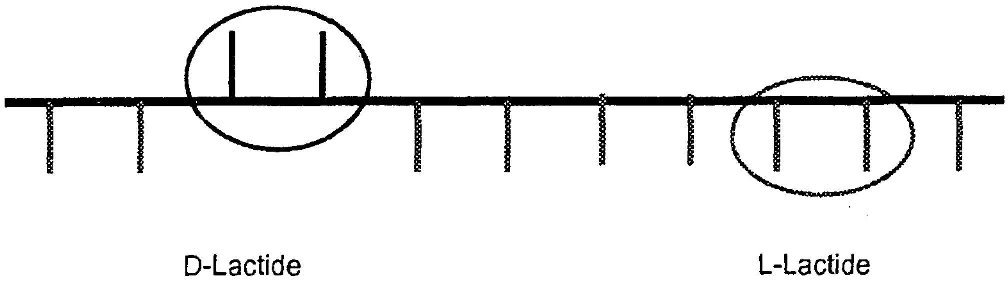


Schéma 1

Une analyse RMN du $^{13}C$ sur le signal du pic C=O a été réalisée sur les 3 PL-LA modèles. Le spectre RMN obtenu pour les 3 PL-LA modèles est représenté à la figure 1.

L'analyse du spectre RMN représenté à la figure 1 a permis de déterminer les 4 pics provenant des défauts de tacticité dus à l'insertion de motif D-Lactide dans la chaîne de L-Lactide.

b) Identification des pics de racémisation

Le PL-LA synthétisé dans des conditions contrôlées de polymérisation à haute température subit une racémisation contrôlée du L-LA en méso-LA. Pour identifier les pics provenant des défauts de tacticité du à la racémisation du L-Lactide, un PL-LA obtenu à partir de L-LA très pur (>99,5% L-LA) a été synthétisé dans les conditions suivantes :

- en masse dans un réacteur continu agité,
- en présence du système catalytique bis(2-ethylhexanoate) d'étain et $PPh_3$,
- pendant 45 minutes à 185°C.

Le schéma 2 illustre l'insertion de meso-Lactide obtenu par racémisation dans une chaîne polymérique de PL-LA.

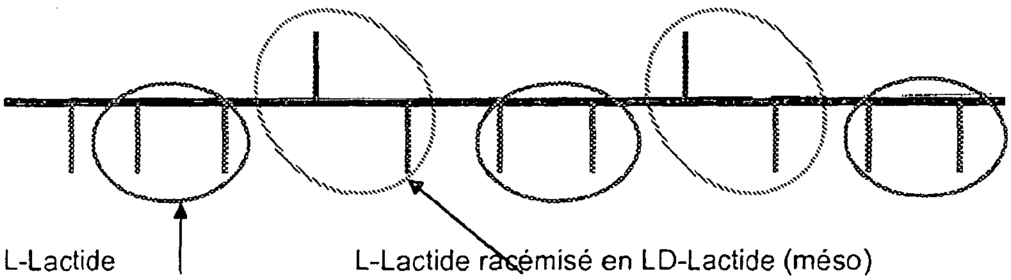


Schéma 2

Une analyse RMN du $^{13}C$ sur le signal du pic C=O a été réalisée sur le PLA racémisé. Le spectre RMN obtenu est représenté à la figure 2. L'analyse du spectre permet de déterminer les pics issus des défauts de tacticité dus à la racémisation du L-Lactide qui provoque des insertions LD-Lactide ou meso-Lactide.

c) Exemple d'analyse RMN $^{13}C$ de produits commerciaux.

Des PLA disponibles sur le marché ou PLA commerciaux préparés par un procédé usuellement utilisé pour la polymérisation de L-Lactide ont été analysés. Pour ces PLA, les pics de défauts de tacticité dus à l'insertion et les pics de défaut de tacticité dus à la racémisation ont été identifiés sur le spectre RMN $^{13}C$. Le spectre RMN obtenu est représenté à la figure 3. L'analyse et l'interprétation du spectre de la figure 3 à la lumière des spectres des figures 1 et 2, nous permettent d'attribuer les pics dus aux défauts d'insertion et ceux dus aux défauts de racémisation. Nous notons qu'il existe un signal combiné vers 169.35 ppm. Ce pic est du aux défauts d'insertion et de racémisation. D'autre part, une partie de ce pic est due au satellite du pic d'isotacticité L.

d) Dosage enzymatique de la tacticité globale en D-mer ou L-mer

Les lactides sont des dimères. L'analyse enzymatique permet de mesurer la totalité du monomère d'une des deux formes d'énantiomères optiquement actives présent dans le dimère, comme par exemple la teneur en D-mer ou L-mer dans le lactide afin de contrôler sa pureté. Cette analyse peut aussi être réalisée sur les PL-LA et PD-LA après polymérisation. Une unité de L-LA dans le PL-LA donnera 100% de L-mer et une unité de D-LA dans le PD-LA donnera 100% de D-mer. Une unité de méso-LA donnera 50% de D-mer et 50% de L-mer. Donc, lors de la racémisation du L-LA ou du D-LA, nous nous trouverons en présence d'un équivalent méso-LA.

Le lactide peut être représenté sous les 2 formes chirale suivante :

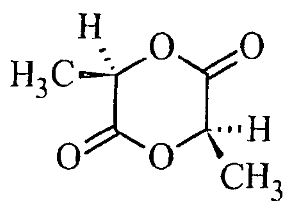

D-Lactide (RR)

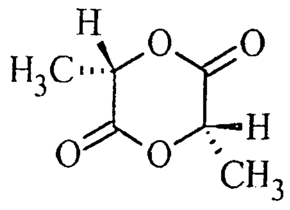

L-Lactide (SS)

Le mesc-lactide (non chirale) peut être représenté de la manière suivante :

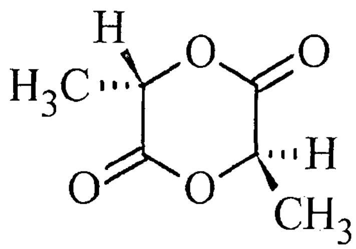

Ce méso-lactide n'est pas disponible commercialement.

Le schéma 3 illustre l'insertion de D-Lactide et de « meso-Lactide » obtenu par racémisation dans une chaine polymérique de PL-LA

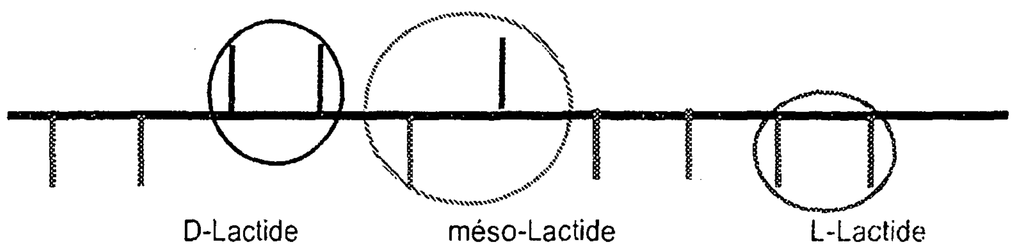


Schéma 3

Dans l'exemple du schéma 3, une unité (20%) de D-LA est insérée et une unité (20%) de L-LA s'est racémisée. L'analyse enzymatique donnera donc 30 % de D-mer dans cet échantillon.

La méthode enzymatique permet de déterminer le pourcentage de D-mer (motif monomérique de type D) que nous retrouvons dans la chaine polymérique de PL-LA ou le pourcentage de L-mer (motif monomérique de type L) que nous retrouvons dans le chaîne polymérique de PD-LA. A aucun moment, la méthode enzymatique permet de déterminer l'origine de ce motif monomérique : insertion ou racémisation.

e) Détermination quantitative des défauts de tacticité globale, des défauts de tacticité d'insertion et de racémisation par combinaison des deux techniques RMN $^{13}C$ et enzymatique

Si pour la chaîne polymérique représenté par le schéma 3, la surface des pics de défauts d'insertion et la surface des pics de défauts de racémisation (équivalent méso) est par exemple de 2 pour 1 par RMN 13C alors la répartition des défauts est la suivante : 67% de défauts d'insertion et 33% de défauts de racémisation. D'autre part, si la mesure enzymatique de cet échantillon nous donne 30% de D-mer (ou 30 % en poids d'équivalent D-LA) et sachant que 67% des défauts sont des défauts d'insertion, cela correspond donc à 67% de 30% de D-mer, soit 20% de D-mer et donc à 20% de D-LA.

En ce qui concerne les défauts de racémisation, sachant que ceux-ci sont de l'ordre de 33%, cela corresponds à 10% de D-mer et 20% d'équivalent méso-LA.

Nous pouvons ainsi calculer les quantités de L-LA, D-LA et méso-LA (LD-LA) présent dans la chaîne de PL-LA par :

$$\%\ \text{poids D-LA} = \left[\frac{\text{STPI}}{\text{STPI} + \text{STPR}}\right] \times \%\ \text{D-mer}$$

dans laquelle « STPI » représente la surface totale des pics d'insertion et « STPR » la surface totale des pics de racémisation déterminées par RMN multipliée par le % de D-mer déterminé par méthode enzymatique. Le % poids de D-LA représente donc la tacticité d'insertion.

$$\%\ \text{poids méso-LA} = \left[\left[\frac{\text{STPR}}{\text{STPR} + \text{STPI}}\right] \times \%\ \text{D-mer}\right] \times 2$$

Le % poids méso-LA représente donc la tacticité de racémisation.

$$\%\ \text{poids L-LA} = 100 - (\%\ \text{poids D-LA} + \%\ \text{poids méso-LA})$$

$$\text{Tacticité globale} = \text{tacticité d'insertion} + \text{tacticité de racémisation}$$

f) Méthode analytique

1. Méthode enzymatique

La pureté stéréochimique de l'acide poly-L-lactique ou de l'acide poly-D-lactique de l'invention a été déterminée par la teneur respective en L-mer ou en D-mer. Cette détermination a été faite par méthode enzymatique.

Le principe de la méthode est le suivant : Les ions L-lactate et D-Lactate sont oxydés en pyruvate respectivement par les enzymes L-lactate déshydrogénase et D-lactate déshydrogénase utilisant la nicotinamide adénine dinucléotide (NAD) comme coenzyme. Pour forcer la réaction en direction de la formation du pyruvate, il est nécessaire de piéger ce composé par réaction avec l'hydrazine. L'augmentation de la densité optique à 340 nm est proportionnelle à la quantité de L-lactate ou de D-lactate présents dans l'échantillon.

Les échantillons d'acide polylactique ont été préparés en mélangeant 25 ml d'hydroxyde de sodium (1mol/L) à 0,6 g de PLA. La solution a été portée à ébullition durant 8h puis refroidie. La solution a ensuite été amenée à pH neutre par ajout d'acide chlorhydrique (1mol/L), puis de l'eau désionisée a été rajoutée en quantité suffisante pour arriver à 200 ml.

Les échantillons ont ensuite été analysés sur un analyseur Vital Scientific Selectra Junior utilisant pour la détermination en L-mer de l'acide poly-L-lactide, le coffret intitulé « L-lactic acid 5260 » commercialisé par la société Scil et pour la détermination en D-mer de l'acide poly-D-lactide, le coffret intitulé « L-lactic acid 5240 » commercialisé par la société Scil. Lors de l'analyse, un blanc réactif et une calibration utilisant le calibrant « Scil 5460 » sont utilisés.

La détermination de la pureté optique ou isomérique du lactide se fait par la même méthode enzymatique. Seul diffère la préparation de l'échantillon. Les échantillons de lactide ont été préparés en mélangeant 25 ml d'hydroxyde de sodium (1mol/L) à 0,6 g de lactide. La solution a été mélangée puis laissée au repos pendant une demi-heure avant d'être amenée à pH neutre par ajout d'acide chlorhydrique (1mol/L), puis de l'eau désionisée a été rajoutée en quantité suffisante pour arriver à 200 ml.

2. Méthode RMN

La présence de défauts d'insertion et de racémisation a été déterminée par résonance magnétique nucléaire (RMN) du carbone 13 (Avance, 500 Mhz, sonde SELX de 10 mm). Les échantillons ont été préparés à partir de 250 mg d'acide polylactique dissous dans 2,5 à 3 ml de $CDCl_3$.

2. <u>Exemples 1-4</u>

On a appliqué le procédé de l'invention pour préparer divers échantillons de polylactide isotactique. Le lactide de départ de configuration stéréochimique L-L ayant une pureté isomérique supérieure à 99,5% en poids a été mis en contact avec le sel bis(2-ethylhexanoate) d'étain (II) en présence de triphénylephosphine, $PPh_3$. Le rapport molaire entre le lactide et le catalyseur (lactide/catalyseur) était de 4.000. Le procédé a été effectué sous pression atmosphérique avec un balayage d'azote dans un réacteur continu horizontal muni d'un agitateur. La teneur en eau résiduel du lactide était comprise entre 25 et 50 ppm. Les conditions de polymérisation telles que la température, le temps de séjour et la vitesse de rotation de l'agitateur pour les divers essais sont mentionnées dans le tableau 1.

Le pourcentage de L-mer a été déterminé par la méthode enzymatique. Le pourcentage de D-mer a été déterminée par calcul (100% -% L-mer).

La présence de défauts d'insertion et de racémisation a été déterminée par résonance magnétique nucléaire (RMN) du carbone 13.

Le pourcentage de lactide de départ n'ayant pas réagi, appelé lactide résiduel, a été mesuré par RMN $H^1$. Les résultats sont présentés dans le tableau 1 ci-dessous.

Tableau 1

| Ex. | Température (°C) | Vitesse de rotation (Tours/ min) | Temps de séjour (min) | Pression absolue (mbar) | Lactide résiduel (%) | L-mer (%) | D-mer (%) | Défaut d'insertion (%DD-LA) | Défaut de racémisation (%LD-LA) | Mn | Mw/Mn |
|---|---|---|---|---|---|---|---|---|---|---|---|
| 1 | 175 | 50 | 30 | 1013 | 11,5 | 98,9 | 1,1 | <0,2 | 1,8 | 117.000 | 1.90 |
| 2 | 195 | 20 | 30 | 1013 | 7,5 | 99 | 1 | <0,2 | 1,6 | 121.000 | 1.93 |
| 3 | 180 | 30 | 42 | 60 | 6,5 | 98,8 | 1,2 | <0,2 | 2 | 69.000 | 2.40 |
| 4 | 185 | 35 | 45 | 1013 | 8,7 | 98,7 | 1,3 | <0,2 | 2,2 | 109.000 | 1.86 |

3. Exemples 5-9

Trois polymères d'acide poly-L-lactique commerciaux (C à E) préparés par un procédé usuellement utilisé pour la polymérisation de lactide ont été comparés à deux polymères d'acide poly-L-lactique (A et B) obtenus avec le procédé de l'invention.

Les polymères d'acide poly-L-lactique A et B ont été synthétisés en réacteur à partir du L-lactide d'une pureté optique supérieure à 99,5%, à une température de 175°C et un temps de séjour de 25 minutes en présence de bis(2-ethylhexanoate) d'étain (II) et de triphénylephosphine $PPh_3$. Le rapport molaire entre le lactide et le catalyseur (lactide/catalyseur) était de 4.000. La polymérisation de l'acide poly-L-lactique A a été effectuée a pression atmosphérique (1013 mbars) sous balayage d'azote. La polymérisation de l'acide polylactique B a été effectuée sous azote à la pression de 1213 mbars. Le 1-dodécanol a été utilisé comme initiateur dans un rapport molaire lactide/alcool s'élevant à 681. Les résultats sont présentés dans le Tableau 2.

Tableau 2

| | Exemple 5 (Polymère A) | Exemple 6 (polymère B) | Exemple 7 (polymère C) | Exemple 8 (polymère D) | Exemple 9 (polymère E) |
|---|---|---|---|---|---|
| Défaut de racémisation (% LD-LA) | 1,0 | 1,0 | 15,5 | 11,7 | 12,6 |
| Défaut d'insertion (% DD-LA) | <0,2 | <0,2 | 4,1 | 1,2 | 1,3 |
| D-mer (%) | 0,7 | 0,7 | 11,9 | 7,0 | 7,6 |
| Mn | 66.000 | 102.000 | 110.000 | 80.000 | 86.000 |
| Mw/Mn | 1.53 | 1.90 | 2.0 | 2.0 | 2.0 |

Les polymères d'acide poly-L-lactique A et B selon l'invention ne présentent pas ou peu de défaut d'insertion contrairement aux autres polymères d'acide polylactique. Leurs pourcentages de défaut de racémisation (équivalent mésolactide) sont également très inférieurs à ceux des polymères commerciaux C à E.

La température de cristallisation des échantillons A à E a été déterminée par colorimétrie différentielle à balayage selon la méthode ISO 11357-2. Selon cette méthode, les échantillons ont été chauffés de 20°C à 200°C à raison de 10°C par minute, puis refroidis de 200°C à 20°C à raison de 20°C par minute et ensuite réchauffés de 20°C à 200°C à raison de 10°C par minute.

La température de cristallisation mesurée lors de la deuxième chauffe des polymères A et B était comprise entre 100 et 120°C. Un phénomène de cristallisation était également observable lors du refroidissement après la première chauffe entre 90 et 100°C pour les dits polymères. Aucune température de cristallisation n'est observée sur les thermogrammes de fusion des échantillons des produits commerciaux C à E.

4. Exemple 10

Dans cet exemple, l'acide poly-L-lactique a été synthétisé à partir de L-L-lactide d'une pureté optique supérieure à 99,5%, en extrudeuse double vis (rapport L/D : 56) à une température de 195°C pendant 20 minutes en présence de bis(2-ethylhexanoate) d'étain (II) et de triphénylphosphine. Le rapport molaire entre le lactide et le catalyseur (lactide/catalyseur) était de 5.000. La polymérisation de l'acide poly-L-lactique a été effectuée a pression atmosphérique sous balayage d'argon. L'octanol a été utilisé comme initiateur. Le rapport molaire entre le lactide et l'octanol (lactide/octanol) était de 400.

La quantité de L-mer, déterminée par méthode enzymatique sur le polymère obtenu est de 99,6%. Le pourcentage de défaut d'insertion (% DD-LA) est inférieur à 0,2% et le pour centage de défaut de racémisation (% LD-LA) est de 0,5%.

La masse moléculaire moyenne en nombre est de 74.000 et le rapport Mw/Mn est de 1,76.

La température de cristallisation du polymère obtenu a été déterminée selon la même méthode que celle mentionnée dans l'exemple 3. La température de cristallisation mesurée lors de la deuxième chauffe dudit polymère était comprise entre 100 et 120°C. Un phénomène de cristallisation était également observable lors du refroidissement après la première chauffe entre 90 et 100°C pour ledit polymère.

## Revendications

**1.** Procédé de polymérisation en masse pour l'obtention :

- d'acide polylactique de configuration L, de masse moléculaire moyenne en nombre compris entre 60.000 et 200.000 ayant un pourcentage d'unité dimère D-D de formule Ia)

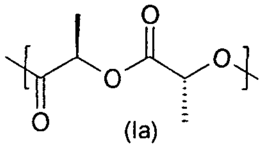
(Ia)

compris entre 0 et 0,5 % en poids d'acide poly-L-lactique et un pourcentage d'unité dimère D-L et/ou L-D de formules (II) et (III)

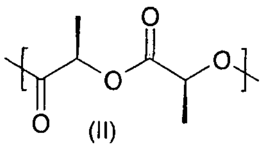
(II)
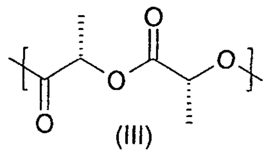
(III)

compris entre 0 et 2,5% en poids d'acide poly-L-lactique,
ou
- d'acide polylactique de configuration D, de masse moléculaire moyenne en nombre compris entre 60.000 et 200.000 ayant un pourcentage d'unité dimère L-L de formule (Ib)

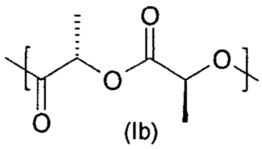
(Ib)

compris entre 0 et 0,5 % en poids d'acide poly-D-lactique et un pourcentage d'unité dimère D-L et/ou L-D de formules (II) et (III)

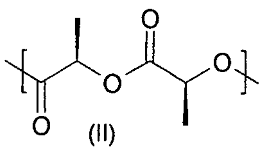
(II)
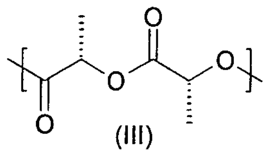
(III)

compris entre 0 et 2,5% en poids d'acide poly-D-lactique, **caractérisé en ce que** l'on effectue la polymérisation en masse consistant à mettre en contact, à une température comprise entre 170 et 200°C et pendant un temps de réaction compris entre 5 et 75 minutes, du lactide correspondant de configuration stéréochimique L-L ou D-D ayant une pureté optique en L ou D d'au moins 99,5% en poids avec au moins un système catalytique comprenant un catalyseur et un co-catalyseur en présence d'un agent d'initiation pour former l'acide poly-L-lactique ou l'acide poly-D-lactique et sous surpression d'azote dont la teneur en $H_2O$ est inférieure à 50 ppm, de préférence inférieure à 10 ppm, et de manière particulièrement préférée inférieure à 5 ppm, le procédé étant un procédé en continu.

**2.** Procédé selon les revendications 1, **caractérisé en ce que** l'initiateur est l'eau, un alcool ou une amine de formule générale $R^{10}$-$(A)_s$ dans laquelle A est OH ou $NH_2$, s est 1 ou 2 et $R^{10}$ est un groupe alkyle ou aryle substitué on non.

**3.** Procédé selon l'une quelconque des revendications 1 à 2, **caractérisé en ce que** ledit procédé est effectué en réacteur avec optionnellement un agitateur haute viscosité.

**4.** Procédé selon l'une quelconque des revendications 1 à 3 **caractérisé en ce que** ledit procédé est effectué par

extrusion dans une extrudeuse.

**5.** Acide poly-L-lactique susceptible d’être obtenu par le procédé selon l’une quelconque des revendications 1 à 4 **caractérisé en ce que** la température de cristallisation observable par calorimétrie différentielle à balayage selon la méthode ISO 11357-2, lors du refroidissement après la première chauffe est comprise entre 110 et 120°C et celle observable lors du refroidissement après la deuxième chauffe est comprise entre 90 et 100°C et le rapport entre la masse moléculaire moyenne en poids (Mw) et la masse moléculaire moyenne en nombre (Mn) est compris entre 1,2 et 2,8.

**6.** Acide poly-D-lactique susceptible d’être obtenu par le procédé selon l’une quelconque des revendications 1 à 4 **caractérisé en ce que** la température de cristallisation observable par calorimétrie différentielle à balayage selon la méthode ISO 11357-2, lors du refroidissement après la première chauffe est comprise entre 110 et 120°C et celle observable lors du refroidissement après la deuxième chauffe est comprise entre 90 et 100°C et le rapport entre la masse moléculaire moyenne en poids (Mw) et la masse moléculaire moyenne en nombre (Mn) est compris entre 1,2 et 2,8.

**7.** Utilisation de l’acide polylactique selon l’une des quelconques revendications 5 ou 6 pour la fabrication d’emballage, de textiles et d’objets à usage unique.

**8.** Utilisation de l’acide polylactique selon l’une des quelconques revendications 4 ou 6 dans le domaine des applications durables.

**Patentansprüche**

**1.** Massepolymerisationsverfahren zur Herstellung:

- von Polymilchsäure der Konfiguration L mit einem zahlengemittelten Molekulargewicht zwischen 60.000 und 200.000 mit einem Dimereinheits-Prozentsatz D-D der Formel (Ia)

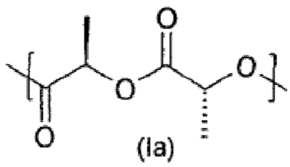

(Ia)

zwischen 0 und 0,5 Gew.-% Poly-L-Milchsäure und einem Dimereinheits-Prozentsatz D-L und/oder L-D der Formeln (II) und (III)

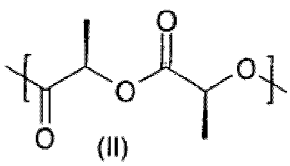

(II)

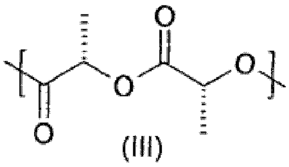

(III)

zwischen 0 und 2,5 Gew.-% Poly-L-Milchsäure,
oder
- von Polymilchsäure der Konfiguration D mit einem zahlengemittelten Molekulargewicht zwischen 60.000 und 200.000 mit einem Dimereinheits-Prozentsatz L-L der Formel (Ib)

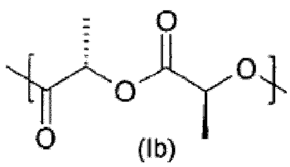

(Ib)

zwischen 0 und 0,5 Gew.-% Poly-D-Milchsäure und einem Dimereinheits-Prozentsatz D-L und/oder L-D der Formeln (II) und (III)

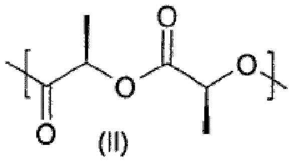
(II)

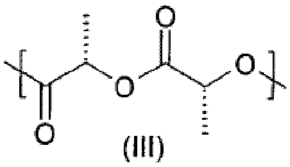
(III)

zwischen 0 und 2,5 Gew.-% Poly-D-Milchsäure, **dadurch gekennzeichnet, dass** die Massenpolymerisation, die darin besteht, Laktid, das der stereochemischen Konfiguration L-L oder D-D mit einer optischen L- oder D-Reinheit von mindestens 99,5 Gew.-% entspricht, bei einer Temperatur zwischen 170 und 200 °C und während einer Reaktionszeit zwischen 5 und 75 Minuten, bei Anwesenheit eines Initiationsmittels mit mindestens einem katalytischen System in Kontakt zu versetzen, umfassend einen Katalysator und einen Co-Katalysator, durchgeführt wird, um die Poly-L-Milchsäure oder die Poly-D-Milchsäure zu bilden, und bei Stickstoffüberdrück, dessen Gehalt an $H_2O$ geringer als 50 ppm, vorzugsweise geringer als 10 ppm und besonders bevorzugt geringer als 5 ppm ist, wobei das Verfahren ein kontinuierliches Verfahren ist.

2. Verfahren nach Anspruch 1, **dadurch gekennzeichnet, dass** der Initiator Wasser, ein Alkohol oder ein Amin mit der allgemeinen Formel $R^{10}$-$(A)_s$ ist, wobei A OH oder $NH_2$ ist, s 1 oder 2 ist und $R^{10}$ eine Alkyl- oder Arylgruppe ist, substituiert oder nicht.

3. Verfahren nach einem der Ansprüche 1 bis 2, **dadurch gekennzeichnet, dass** das Verfahren im Reaktor mit optional einem Hochviskositäts-Rührer durchgeführt wird.

4. Verfahren nach einem der Ansprüche 1 bis 3, **dadurch gekennzeichnet, dass** das Verfahren durch Extrusion in einem Extruder durchgeführt wird.

5. Poly-L-Milchsäure, die durch das Verfahren nach einem beliebigen der Ansprüche 1 bis 4 erhalten werden kann, **dadurch gekennzeichnet, dass** die Kristallisierungstemperatur, die durch dynamische Differenzkalorimetrie gemäß dem Verfahren ISO 11357-2 bei der Abkühlung nach der ersten Erhitzung zu beobachten ist, im Bereich zwischen 110 °C und 120 °C liegt, und diejenige, die bei der Abkühlung nach der zweiten Erhitzung zu beobachten ist, im Bereich zwischen 90 °C und 100 °C liegt, und das Verhältnis zwischen dem gewichtsgemittelten Molekulargewicht (Mw) und dem zahlengemittelten Molekulargewicht (Mn) im Bereich zwischen 1,2 und 2,8 liegt.

6. Poly-D-Milchsäure, die durch das Verfahren nach einem beliebigen der Ansprüche 1 bis 4 erhalten werden kann, **dadurch gekennzeichnet, dass** die Kristallisierungstemperatur, die durch dynamische Differenzkalorimetrie gemäß dem Verfahren ISO 11357-2 zu beobachten ist, bei der Abkühlung nach der ersten Erhitzung im Bereich zwischen 110 und 120 °C liegt, und diejenige, die bei der Abkühlung nach der zweiten Erhitzung zu beobachten ist, im Bereich zwischen 90 und 100 °C liegt, und Verhältnis zwischen dem gewichtsgemittelten Molekulargewicht (Mw) und dem zahlengemittelten Molekulargewicht (Mn) im Bereich zwischen 1,2 und 2,8 liegt.

7. Verwendung von Polymilchsäure nach einem der beliebigen Ansprüche 5 oder 6 zur Herstellung von Verpackung, Textilien und Einwegobjekten.

8. Verwendung von Polymilchsäure nach einem der beliebigen Ansprüche 4 oder 6 im Bereich der nachhaltigen Anwendungen.

## Claims

1. A bulk polymerization method for obtaining:

- polylactic acid of configuration L, with a number average molecular mass comprised between 60,000 and 200,000 having a percentage of a D-D dimer unit of formula (Ia)

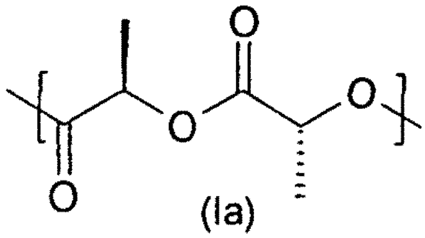

(Ia)

comprised between 0 and 0.5% by weight of poly-L-lactic acid and a percentage of D-L and/or L-D dimer unit of formulae (II) and (III)

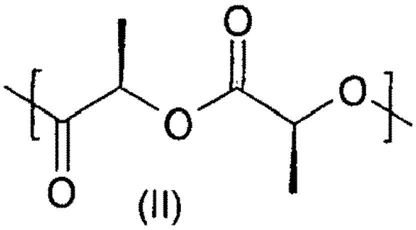

(II)

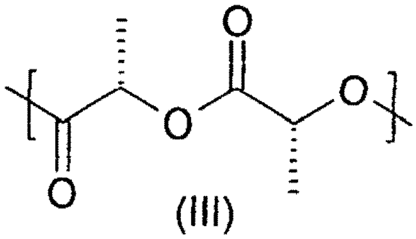

(III)

comprised between 0 and 2.5% by weight of poly-L-lactic acid or

- polylactic acid of configuration D, with a number average molecular mass comprised between 60,000 and 200,000 having a percentage of L-L dimer unit of formula (Ib)

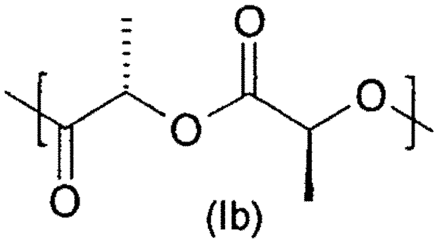

(Ib)

comprised between 0 and 0.5% by weight of poly-D-lactic acid and a percentage of a D-L and/or L-D dimer unit of formulae (II) and (III)

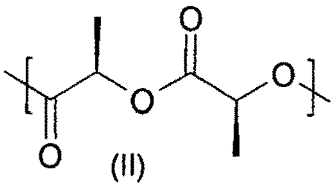

(II)

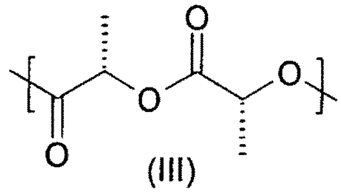

(III)

comprised between 0 and 2.5% by weight of poly-D-lactic acid, **characterized in that** the bulk polymerization is carried out, consisting of putting into contact, at a temperature comprised between 170 and 200°C and for a reaction time comprised between 5 and 75 minutes, a corresponding lactide of stereochemical configuration L-L or D-D having an optical purity of L or D of at least 99.5% with at least one catalytic system comprising a catalyst and a co-catalyst in the presence of an initiator agent for forming poly-L-lactic acid or poly-D-lactic acid and under nitrogen overpressure, for which the $H_2O$ content is less than 50 ppm, preferably less than 10 ppm, and more preferably less than 5 ppm, the method being a continuous method.

**2.** The method according to claim 1, **characterized in that** the initiator is water, an alcohol or an amine of general formula $R^{10}$- $(A)_s$ wherein A is OH or $NH_2$, s is 1 or 2 and $R^{10}$ is an alkyl or aryl group either substituted or not.

**3.** The method according to any of claims 1 to 2, **characterized in that** said method is carried out in a reactor with optionally a high viscosity stirrer.

4. The method according to any of claims 1 to 3, **characterized in that** said method is carried out by extrusion in an extruder.

5. A poly-L-lactic acid which may be obtained by the method according to any of claims 1 to 4 **characterized in that** the crystallization temperature which may be observed by differential scanning calorimetry according to the ISO 11357-2 method, during the cooling after the first heating is comprised between 110°C and 120°C and the one which may be observed during cooling after the second heating is comprised between 90 and 100°C and the ratio between the mass average molecular mass (Mw) and the number average molecular mass (Mn) is comprised between 1.2 and 2.8.

6. A poly-D-lactic acid which may be obtained by the method according to any of claims 1 to 4 **characterized in that** the crystallization temperature which may be observed by differential scanning calorimetry according to the ISO 11357-2 method, during the cooling after the first heating is comprised between 110°C and 120°C and the one which may be observed during cooling after the second heating is comprised between 90 and 100°C and the ratio between the mass average molecular mass (Mw) and the number average molecular mass (Mn) is comprised between 1.2 and 2.8.

7. The use of the polylactic acid according to one of the claims 5 or 6 for the manufacturing of packages, textiles and objects for single-use.

8. The use of the polylactic acid according to one of the claims 4 or 6 in the field of sustainable applications.

Figure 1

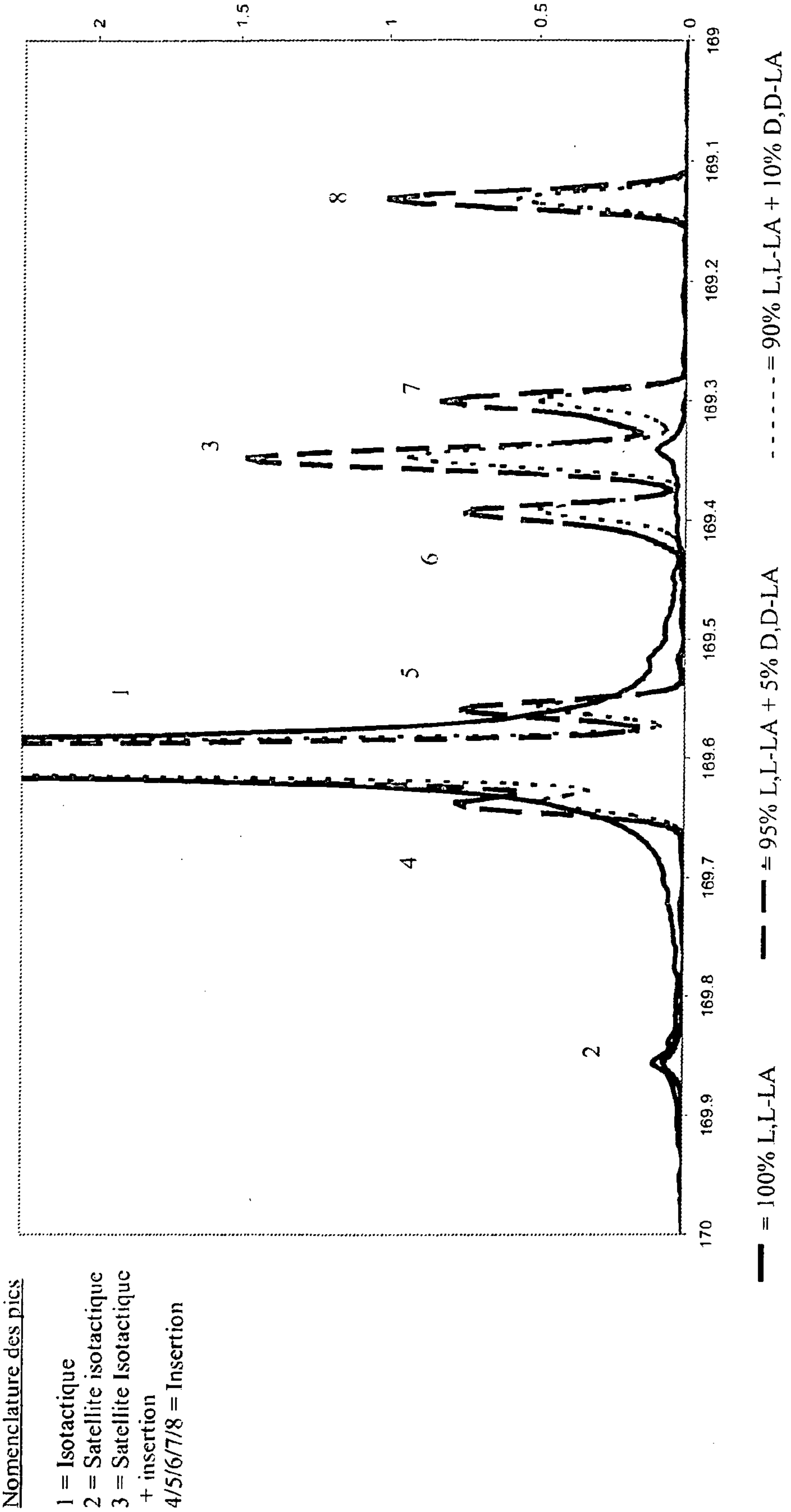


Nomenclature des pics

1 = Isotactique
2 = Satellite isotactique
3 = Satellite Isotactique + insertion
4/5/6/7/8 = Insertion

Figure 2

**Nomenclature des pics**

1 = Isotactique
2 = Satellite isotactique
3 = Satellite Isotactique + racémisation
4/5/6 = racémisation

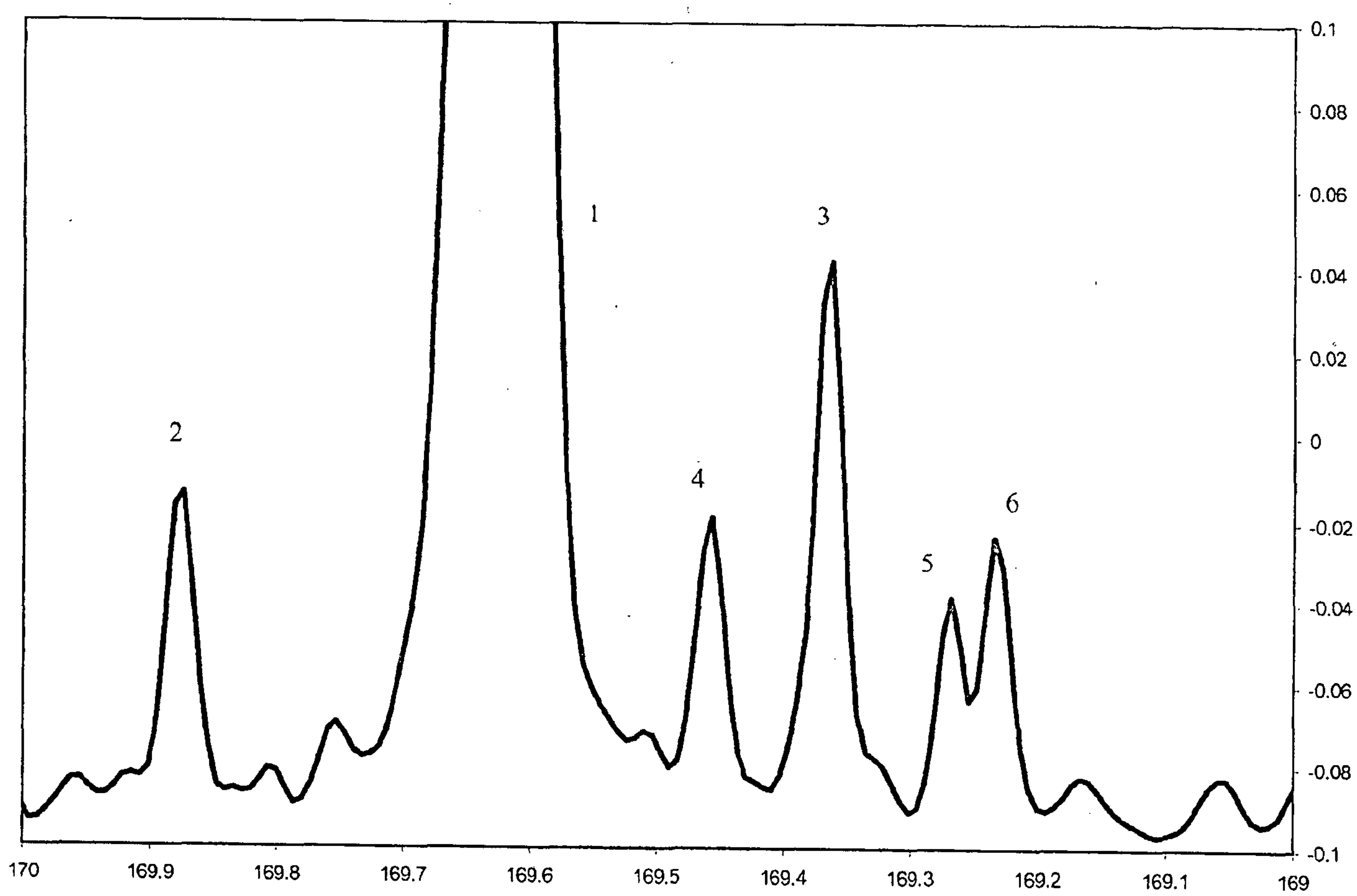

Figure 3

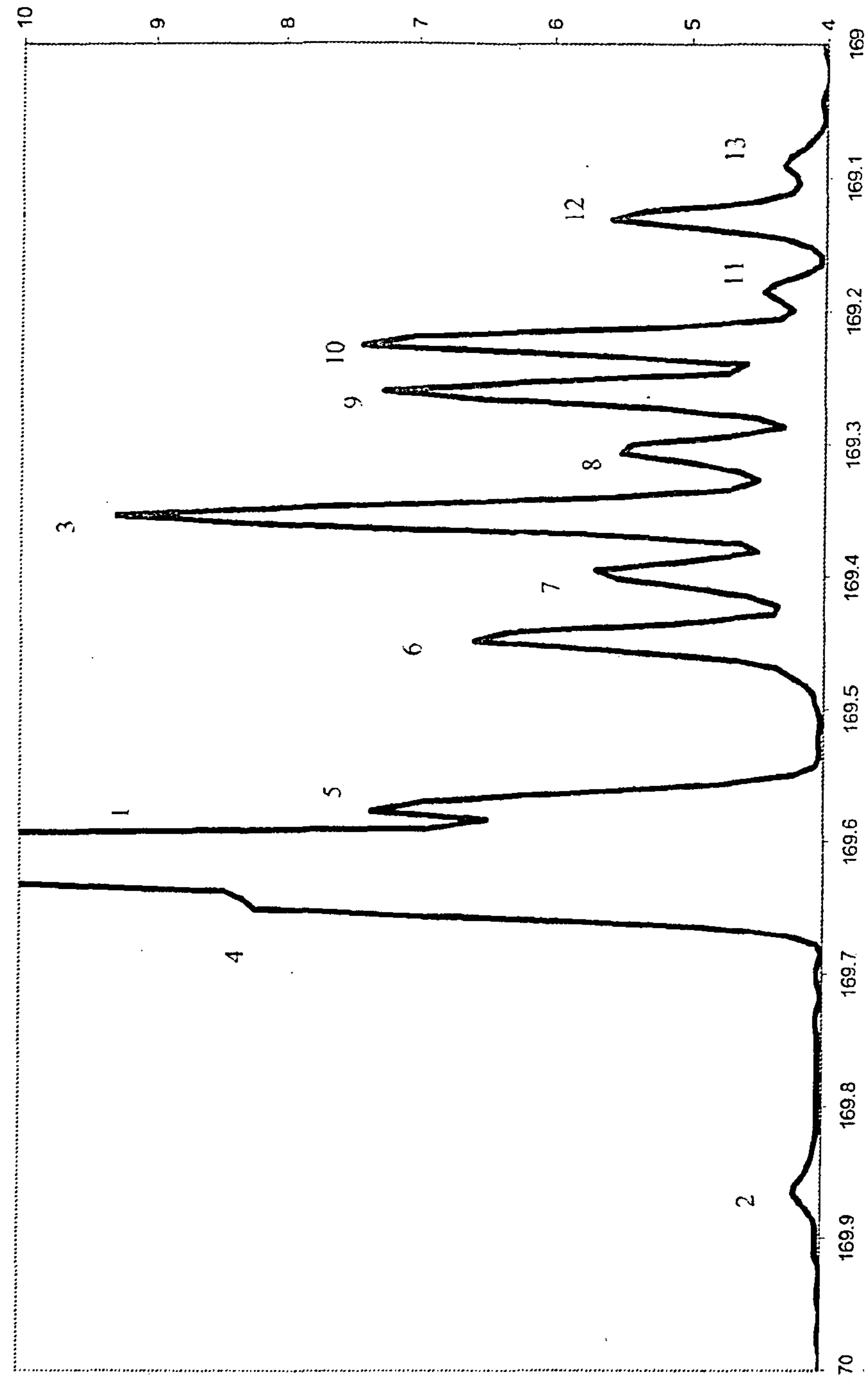


Nomenclature des pics

1 = Isotactique
2 = Satellite isotactique
3 = Satellite Isotactique + insertion + Racémisation
4/5/7/8/12 = Insertion
6/9/10/11/13 = Racémisation

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6166169 A
- BE 1008099 A3